# FASCICULE DE BREVET EUROPEEN

(11) **EP 0 799 126 B1**
(45) Date de publication et mention de la délivrance du brevet: **18.04.2001**
(21) Numéro de dépôt: 95942759.2
(22) Date de dépôt: 18.12.1995
(51) Int. Cl.: B29C 70/76, B29C 33/20, B29C 43/38

(54) **PROCEDE DE FINITION D'UN JOINT EXTRUDE IN SITU SUR UNE PLAQUE**
VERFAHREN ZUR FERTIGBEARBEITUNG EINES, AUF EINE PLATTE, IN SITU EXTRUDIERTEN DICHTUNGSPROFILS
METHOD FOR FINISHING A SEAL EXTRUDED IN SITU ON A SHEET

(30) Priorité: 19.12.1994 DE 4445258
(43) Date de publication de la demande: 08.10.1997
(73) Titulaire: SAINT-GOBAIN GLASS FRANCE, 92400 Courbevoie (FR)
(72) Inventeur: KRUMM, Helmut, D-52074 Aachen (DE); KITTEL, Florenz, D-52146 Würselen (DE); KÖTTE, Rolf, D-52477 Alsdorf (DE); MOTZHEIM, Ralf, D-52223 Stolberg (DE)
(74) Mandataire: Muller, René
(86) Numéro de dépôt international: FR9501685
(87) Numéro de publication internationale: WO9619339

(56) Documents cités:
- EP-A- 0 355 209
- EP-A- 0 421 833
- DE-C- 4 137 249
- DE-U- 9 011 573
- FR-A- 1 016 753
- FR-A- 1 362 588
- US-A- 4 688 752

## Description

La présente invention concerne un procédé de postformage d'un profilé extrudé constitué d'une matière malléable, notamment d'un polymère, en particulier dans la zone de raccordement d'un profilé en boucle, à la partie périphérique d'un objet. Dans ce procédé, un moule dont la cavité correspond à la section voulue du profilé est abaissé sur ce dernier en pivotant autour d'un axe orienté parallèlement à l'axe longitudinal dudit profilé. L'invention concerne en outre un dispositif approprié pour la mise en oeuvre du procédé.

Un procédé de ce type, connu et décrit dans le document DE 9011573 U1, sert au postformage d'un cordon profilé, constitué d'un système réactif à base de polyuréthane, et extrudé et appliqué sur un vitrage. Dans ce procédé, le moule se compose d'un dispositif muni de deux mâchoires, qui est guidé en position ouverte à partir de l'extérieur au-dessus de la partie périphérique du vitrage, équipée du cordon profilé. L'axe de pivotement des deux mâchoires est disposé en dehors de l'objet. Après le positionnement du moule, la surface du vitrage opposée au cordon profilé est disposée dans un évidement de l'une des mâchoires, l'autre mâchoire, qui imprime sa forme au cordon, bascule autour de l'axe de pivotement et est pressée sur ce cordon.

Dans la zone du cordon profilé à postformer, il existe normalement un excès de matériau polymère qui doit être éliminé au cours de l'opération de postformage. A cet effet, le dispositif connu est muni d'un canal d'échappement à travers lequel le matériau est refoulé vers la surface de visibilité du vitrage. Ce matériau en excès doit être enlevé par la suite. Comme il adhère à la surface du verre, l'élimination ultérieure de ce matériau entraîne des difficultés.

L'objet de la présente invention est de concevoir un procédé du type précédent qui facilite l'élimination du matériau en excès apparaissant au cours du postformage.

Pour résoudre le problème technique, l'invention propose un procédé de postformage d'un profilé extrudé sur un objet dans lequel un moule présentant une cavité correspondant à la forme du profilé est posé sur le profilé en un mouvement de rotation dans lequel l'axe de rotation est situé au voisinage de la surface de l'objet. Selon l'invention, l'axe de la rotation est situé du côté du profilé opposé au bord de l'objet. De préférence, le moule dans sa rotation entraîne un refoulement de la matière du profilé vers l'extérieur de la surface de l'objet.

Ainsi, dans le procédé selon l'invention, comme dans l'art antérieur, le mouvement de fermeture du moule est un mouvement de rotation. Cependant, par suite de la position de l'axe de pivotement par rapport à la surface de l'objet muni du cordon profilé la cavité du moule et la surface forment un espace fermé. De cette manière, au cours de l'opération de fermeture, le côté du profilé tourné vers la partie centrale de l'objet est d'abord limité par le moule. Dès que celui-ci est appliqué contre la surface de l'objet, aucun matériau constituant le profilé ne peut plus s'échapper de ce côté au cours du processus de formage. On assiste plutôt, avec la poursuite de l'opération de fermeture du moule à un refoulement du matériau en direction de l'extérieur. Lorsque le cordon profilé est extrudé et appliqué à la partie périphérique d'un vitrage, la masse en excès est ainsi pressée et évacuée au-delà de la face latérale du vitrage, où elle peut être enlevée de manière relativement simple. Mais, même dans les cas pour lesquels le cordon profilé n'est pas appliqué à la périphérie immédiate du vitrage, mais plus loin vers la partie interne de ce dernier, l'enlèvement du matériau en excès de la surface dudit vitrage situé d'un seul côté du cordon s'effectue plus facilement que si le matériau en excès doit être éliminé de la surface du vitrage sur les deux côtés du cordon comme dans l'art antérieur.

Selon l'invention, l'axe de pivotement du moule peut-être situé au niveau ou au-dessus ou au-dessous de la surface du vitrage. Toutefois, des composantes de la force qui agit sur le profilé s'exercent dans ces deux derniers cas, parallèlement à cette surface, ce qui, le cas échéant, peut être préjudiciable à l'adhérence du matériau du profilé sur le vitrage et/ou avoir des répercussions négatives sur les propriétés de ce matériau. C'est pourquoi les meilleurs résultats sont obtenus lorsque l'axe de pivotement se situe à hauteur de la surface du vitrage ou légèrement au-dessus de celle-ci. Pratiquement, on peut utiliser un moule qui est muni d'un ressaut sur la face de la cavité calibrée, qui limite le cordon profilé sur sa face interne. Ce ressaut, dont l'arête constituée par ses faces en forme de coin, forme l'axe de pivotement, est d'abord abaissé jusqu'à la surface du vitrage ou jusqu'à sa proximité immédiate, avant le début du mouvement pivotant du moule.

En fait, la description précédente montre qu'avant de se poser sur le profilé, le moule effectue d'abord un déplacement relatif par rapport à la surface de l'objet qui le positionne de manière inclinée, son arête qui correspond à la limite du profilé dirigée vers l'intérieur de la surface du vitrage étant pratiquement au contact de la surface, à l'endroit prévu pour être la limite du profilé dirigée vers la surface du vitrage et qu'ensuite, son déplacement est une rotation autour de cette arête jusqu'à ce que la surface interne de la cavité occupe la position prévue pour la surface du profilé.

Le dispositif pour la mise en oeuvre de l'invention comporte des moyens de positionnement et de fixation du vitrage qui garantissent la localisation précise du profilé à postformer, ainsi qu'un premier moule avec une cavité dont la forme correspond à celle à donner au profilé, la forme du moule étant telle qu'il se termine du côté intérieur au vitrage par une arête dégagée vers l'extérieur, le moule étant capable de se déplacer d'abord sensiblement perpendiculairement à la surface du vitrage en s'en rapprochant de manière inclinée jusqu'à ce que ladite arête vienne pratiquement au contact de la surface du vitrage à l'emplacement du bord du profilé du côté intérieur, le moule étant capable de tourner d'un mouvement circulaire autour d'un axe parallèle et voisin de ladite arête.

D'autres détails et caractéristiques avantageuses de l'invention apparaîtront à la lecture des revendications et de la description ci-après d'un exemple de réalisation préférentiel du dispositif selon l'invention, illustré par les dessins dans lesquels :
- la **figure 1** est une représentation schématique des phases successives de l'opération de postformage d'un cadre profilé muni d'une lèvre de centrage sur un vitrage, et
- la **figure 2** illustre une vue latérale du dispositif pour la mise en oeuvre du procédé.

Le procédé selon l'invention sera décrit ci-après dans le cas du pré-équipement de vitrages, en particulier de vitrages de voiture, prévus pour être montés par collage. Le cadre profilé, qui est extrudé et appliqué sur les vitrages de voiture, peut avoir la section qu'on souhaite. Il peut en particulier présenter une partie à lèvre, en saillie sur le pourtour du vitrage, et dont le développement est à peu près parallèle à la surface du vitrage. Cette partie sert de lèvre de centrage et d'appui lors du montage du vitrage dans l'encadrement et la fenêtre et assure que la bordure du vitrage garde la même distance sur la totalité de son pourtour par rapport au bord du cadre qui lui est opposé. En outre, cette lèvre a pour fonction de fixer le vitrage dans l'ouverture de la fenêtre au cours du processus de durcissement de la colle de montage, de sorte qu'il est possible de faire l'économie de tous les autres moyens de positionnement et de fixation des vitrages au cours de la prise de colle. Le cadre profilé peut en outre présenter des tronçons dits de calage, c'est-à-dire des tronçons de profil qui sont orientés de préférence perpendiculairement à la surface du vitrage et qui servent à déterminer la profondeur de montage de ce dernier dans l'encadrement. De tels tronçons de calage peuvent en même temps servir d'arête de limitation pour la colle de pose. Quelle que soit la section du cadre profilé, un postformage de la zone de transition entre la partie initiale et la partie terminale du profilé extrudé qui se referme sur lui-même en formant une boucle est souhaitable dans tous les cas. Ce postformage est absolument indispensable dans les cas où des parties du cadre restent visibles après montage des vitrages sur les véhicules, ce qui est en particulier le cas pour les lèvres d'étanchéité et de centrage mentionnées.

Par principe, différents systèmes à base de polymère peuvent être utilisés pour l'extrusion et l'application de cordons profilés sur des objets dans la mesure où le matériau polymère adhère suffisamment à la surface de l'objet et présente les caractéristiques voulues de viscosité au cours de l'opération d'extrusion et, après le durcissement de la masse extrudée, les caractéristiques souhaitées concernant son adhérence et sa résistance contre les agents mécaniques et chimiques, ainsi que les propriétés élastiques nécessaires. Pour l'utilisation envisagée, les systèmes à base de polyuréthanes à un composant, durcissant à l'eau, ont fait leur preuve en premier lieu, tels qu'ils ont ont été décrits par exemple dans le document US-3 779 794, et les systèmes à polyuréthanes à deux composants, tels qu'ils ont été décrits dans EP 0 083 797 A1 et 0 024 501 A1, et d'autre part les systèmes à base d'élastomère thermoplastique, tels que décrits dans US-5 336 349. Lorsque le cordon profilé est extrudé à partir d'un système réactif, l'opération de postformage doit bien entendu être effectuée immédiatement après l'opération d'extrusion, avant que le cordon extrudé commence à durcir par suite de la réaction de polymérisation. Par contre, lorsque le profilé est extrudé à partir d'un polymère thermoplastique, il n'est pas nécessaire que l'opération de postformage soit réalisée à la suite immédiate de l'extrusion, mais elle peut être effectuée à un moment ultérieur quelconque. Dans ce cas, il faut simplement s'assurer que le matériau reprenne son état de plasticité en effectuant un réchauffement adéquat de la masse à postformer.

Une condition nécessaire pour pouvoir appliquer les techniques de l'invention est que dans la zone à postformer, on ait un excès de matière, ou, à la limite, précisément la quantité souhaitée. Ce sera en général le cas dans la zone de raccordement entre le début et la fin d'un profilé qui constitue une boucle sur l'objet où il a été déposé, en général par extrusion (mais l'invention s'applique également aux autres techniques de dépôt dans la mesure où le matériau est encore malléable au moment du post-formage). Les techniques de l'invention s'appliquent également là où la forme d'un profilé doit être modifiée, soit parce qu'elle possède un défaut ou bien que dans la zone concernée, on souhaite avoir une autre forme que celle du reste du profilé.

Comme pour les moules connus, il faut éviter toute adhérence entre la surface du moule et la masse de polymère à postformer par le choix de matériaux appropriés pour le moule ou par le dépôt d'un revêtement approprié à sa surface.

Les dépôts appropriés anti-adhérence sont connus et sont choisis en fonction du polymère utilisé pour le cas particulier considéré.

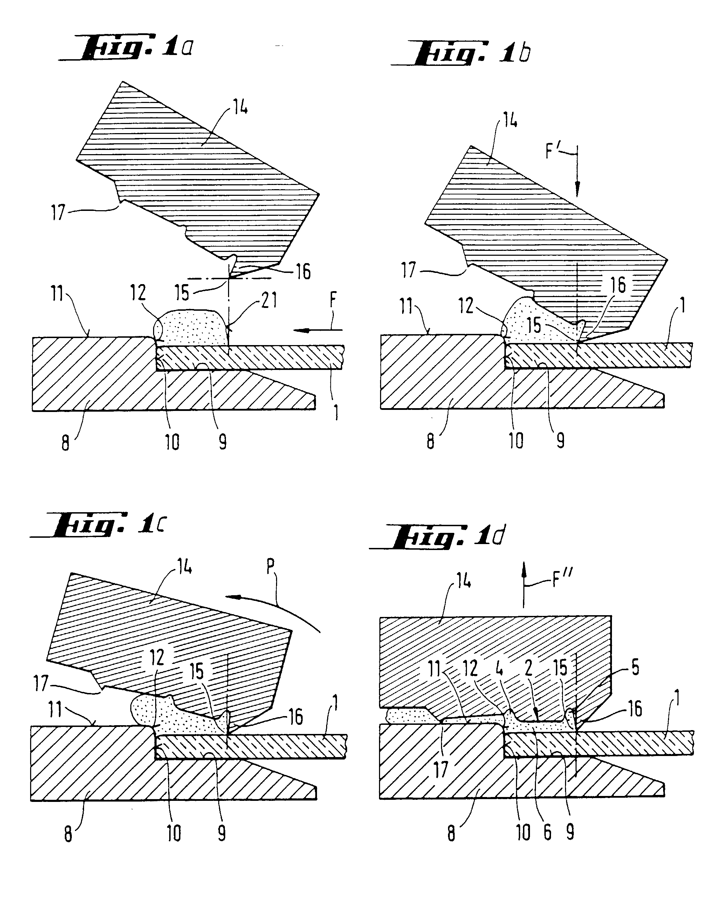

L'exemple de réalisation représenté à la figure 1 décrit l'opération de postformage d'un profilé 2, appliqué à la périphérie d'un vitrage 1, et qui est muni d'une lèvre 3 en saillie au-dessus du pourtour du vitrage. Par ailleurs, le profilé présente dans ce cas une section en U représentée par les deux arêtes 4 et 5 à peu près perpendiculaires à la surface du vitrage 1 et par sa partie médiane 6.

Pour le postformage du profilé extrudé dans le cas envisagé, il faut un premier moule supérieur 14 et un second moule inférieur 8, qui doivent être bien positionnés l'un par rapport à l'autre et par rapport au profilé au cours de l'opération de compression. Le moule inférieur 8 présente une surface d'appui 9 pour le vitrage 1 et une surface de contact 10 destinée à recevoir le bord du vitrage. Les surfaces de moulage 11 et 12 du moule inférieur 8 ont une configuration correspondant à la forme inférieure souhaitée pour la lèvre 3 du profilé extrudé.

Le moule supérieur 14 est calibré sur la cavité de sa face inférieure en fonction de la section de profil voulue. En position fermée, la position relative du moule supérieur 14 et du moule inférieur 8 est déterminée par l'arête tranchante 15 du ressaut 16 d'une part, et par une arête tranchante 17 qui fait saillie d'autre part. Tandis que l'arête tranchante 15 est pratiquement en contact avec la surface du vitrage 1, l'arête tranchante 17 agit au contact de la surface 11 du moule 8.

Au cours de la phase de déplacement relatif A, les deux moules 8 et 14 sont d'abord éloignés l'un de l'autre, pour permettre l'introduction du vitrage entre eux dans la direction de la flèche F entre ces deux éléments, le vitrage vient alors au contact du moule inférieur 8. Le cordon de matériau malléable 20, qui a une forme plus ou moins irrégulière à ce stade, peut déjà être partiellement postformé par la surface de moulage 12 du moule inférieur 8. L'arête 15 du ressaut 16 du moule supérieur 14 prend une position qui se trouve dans un plan vertical qui comprend la limite interne 21 du profilé extrudé 20.

Dès le positionnement du vitrage 1 entre les moules 8 et 14 selon la procédure décrite, la phase B de l'opération de postformage peut commencer. Au cours de cette seconde phase, le moule supérieur 14, qui est incliné, se déplace parallèlement à lui-même, dans la direction de la flèche F vers le moule inférieur 8, jusqu'à ce que l'arête 15 du ressaut 16 entre pratiquement en contact avec le vitrage 1. Lorsque le moule supérieur 14 prend cette position, sa cavité constitue avec la surface du vitrage, avec celle du moule inférieur 8 et, à leurs deux extrémités, avec l'arête 15, un espace fermé sauf sur un côté, de sorte que le matériau polymère ne peut plus s'échapper vers l'intérieur du vitrage. Il peut arriver que le cordon de polymère 20 s'étale en direction de la surface intérieure du vitrage 1 avant l'opération de postformage, dépassant ainsi la section définitive du profil. Dans ce cas, la partie débordante du cordon est sectionnée par l'arête tranchante 15 lors de l'abaissement du moule supérieur 14. Il s'agit cependant d'une ébavure relativement minime, qui se trouve à proximité immédiate du profil postformé et peut être éliminée sans difficulté après solidification du polymère.

Dans la phase C du postformage, le moule supérieur 14 pivote autour de l'arête 15 dans le sens de rotation de la flèche P, la position de ladite arête 15 restant inchangée. La matière malléable reste ainsi enfermée du côté limité par l'arête 15, et la masse en excès du profilé 20 est repoussée vers l'extérieur, entre le moule inférieur 8 et le moule supérieur 14 tandis que la forme prédéfinie par la cavité de ce dernier est simultanément imprimée au profil.

Le mouvement de bascule du moule supérieur 14 chasse la matière excédentaire qu'il refoule en créant la limite du profilé dirigée vers l'extérieur du vitrage. En final, l'arête tranchante 17 coupe cette matière avant d'arriver, à la fin de son déplacement au contact du moule inférieur 8.

A la fin du mouvement pivotant, le moule supérieur a atteint sa position finale dans la phase D de postformage. Dans cette position, l'arête tranchante 17 est pratiquement en contact avec la surface de moulage 11 du moule inférieur 8 et sépare de cette manière le ruban de matériau en excès 24 de la lèvre 3, dont la limite définitive est ainsi déterminée. Le processus du postformage est ainsi achevé. Le moule supérieur 14 est alors relevé parallèlement à lui-même dans la direction de la flèche F et lorsqu'il a atteint sa position finale supérieure, il est replacé dans la position angulaire, nécessaire à la phase A du postformage. Le vitrage 1 muni de son profilé postformé est alors enlevé du moule inférieur 8 et transféré vers la phase de fabrication suivante.

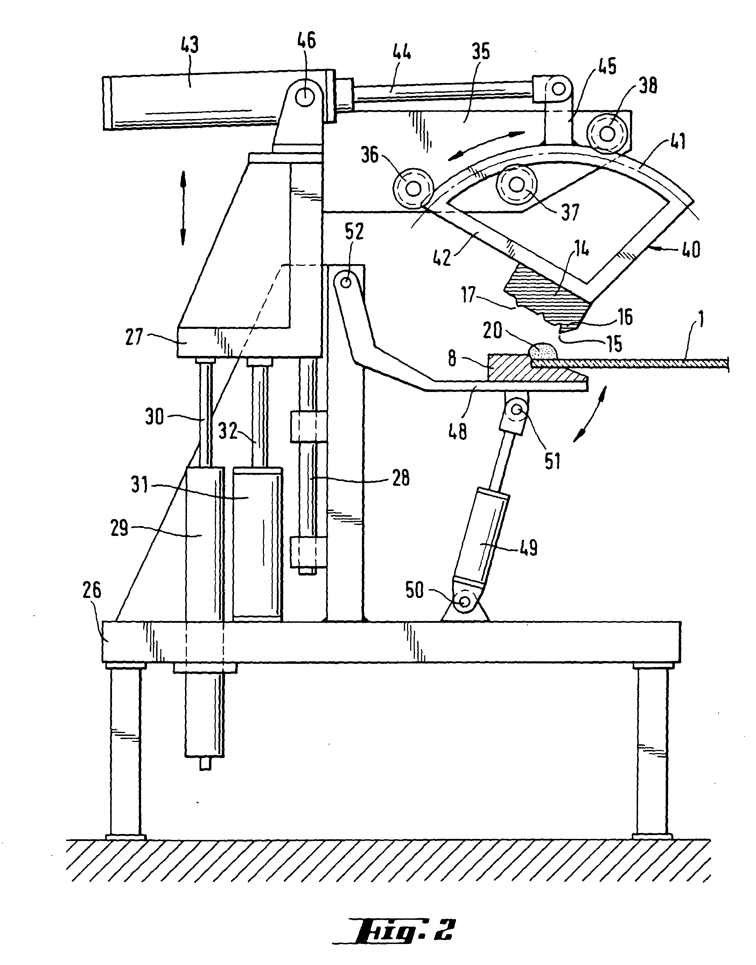

Une machine qui assure la mise en oeuvre du procédé est représentée par la figure 2 dans ses caractéristiques de conception essentielles. Sur le bâti 26 de la machine, un support 27 est monté sur palier et mobile dans la direction verticale. Le support 27 est guidé par des tiges guides 28 verticales et des chemises à roulements. Un frein hydraulique 29, relié au support 27 par la bielle 30, sert à l'amortissement du mouvement vertical. Ce dernier est commandé par le vérin pneumatique 31, qui transmet le mouvement de va-et-vient au support 27 par l'intermédiaire du piston 32.

Une console 35, sur laquelle sont disposés trois galets de guidage 36, 37 et 38, est fixée au support 27. Ces trois galets sevent au maintien et au guidage d'un cadre 40, dont le segment 41 a la constitution d'un segment d'arc de cercle. Ce segment d'arc de cercle 41 peut ainsi pivoter autour du centre du cercle, qui coïncide avec l'arête 15 du moule supérieur 14. Ce dernier est disposé à la partie inférieure 42 du cadre pivotant 40. Le mouvement de bascule du cadre 40 est réalisé au moyen du vérin hydraulique 43 dont le piston 44 s'articule avec le levier 45, qui est lui-même relié au cadre 40. Afin de suivre le mouvement giratoire du cadre 40, le vérin hydraulique 43 est fixé au cadre 27 par l'intermédiaire d'un palier 46 approprié de manière à pouvoir pivoter autour de l'axe de ce dernier.

En outre, un plateau 48 portant de moule inférieur 8 est relié au bâti 26 de la machine par l'intermédaire d'un palier 52 de manière à pivoter autour de ce dernier. Le mouvement pivotant du plateau 48 est assuré par un vérin pneumatique 49, qui est fixé d'une part au bâti 26 de la machine par un palier 50, et d'autre part au plateau 48 par le palier 51.

Pour la mise en oeuvre de l'opération de postformage, le vitrage 1 est déposé et positionné sur le moule 8 avec le tronçon 20 à postformer du cordon de polymère extrudé et appliqué sur le vitrage. Grâce à une commande de la machine non représentée sur le dessin, le support 27 est abaissé par la mise en pression du vérin 31 jusqu'à ce que l'arête 15 du moule supérieur 14 entre pratiquement en contact avec le vitrage 1.

Ensuite, la commande de la mise en pression du vérin 43 permet au moule supérieur 14 d'effectuer son mouvement pivotant autour de l'arête 15. A la fin de l'opération de postformage, le cadre 27 est soulevé par suite de la mise en pression du vérin 31. Lorsque le cadre 27 est en bout de course supérieure, le vérin hydraulique 43 est actionné et le moule supérieur est ainsi ramené dans la position inclinée. Ensuite, l'actionnement du vérin 49 imprime au plateau 48 et au moule inférieur 8 un mouvement de bascule vers le bas et vers l'extérieur, en éloignant les deux éléments cités du vitrage 1. Ainsi, le vitrage 1 et le profilé extrudé 20 postformé s'écartent du moule 8. Le vitrage 1 peut alors être facilement enlevé. Par ailleurs, les moules 8 et/ou 14 peuvent être équipés de dispositifs de réchauffement ou de refroidissement, grâce auxquels, selon le matériau polymère utilisé, le processus de solidification peut être accéléré par refroidissement ou le processus de la réaction accéléré par échauffement du polymère.

La description détaillée qui précède montre que la condition pour la mise en oeuvre du procédé est la création d'un espace fermé sur deux côtés qui se rejoignent (la surface de l'objet et/ou du moule inférieur, et la surface inférieure du moule supérieur) ces deux ensembles étant en contact selon l'arête 15 autour de laquelle leur mouvement relatif de rotation les fait pivoter. La fonction de ces éléments de dispositif et de leurs mouvements est de provoquer sur le matériau du profilé lors de son formage, un déplacement avec une composante perpendiculaire et une composante parallèle, cette dernière étant dirigée vers l'extérieur de l'objet. C'est en effet le seul moyen d'évacuer la matière excédentaire vers l'extérieur et de préférence en dehors de l'objet.

## Revendications

1. Procédé de postformage d'un profilé extrudé (20) sur la surface d'un objet (1) dans lequel un moule (14) présentant une cavité correspondant à la forme du profilé (2) est posé sur le profilé (20) en un mouvement de rotation (P), **caractérisé en ce que** l'axe de rotation (15) est situé au voisinage de la surface de l'objet (1).

2. Procédé de postformage selon la revendication 1, **caractérisé en ce que** l'axe de la rotation (15) est situé du côté du profilé (2) opposé au bord de l'objet (1).

3. Procédé de postformage selon la revendication 1 ou la revendication 2, **caractérisé en ce que** le moule (14) dans sa rotation entraîne un refoulement de la matière du profilé (20) vers l'extérieur de la surface de l'objet (1).

4. Procédé de postformage selon la revendication 2 ou la revendication 3, **caractérisé par** l'utilisation d'un moule (14) qui comporte un ressaut (16) avec une arête (15) autour de laquelle s'effectue la rotation.

5. Procédé de postformage selon la revendication 4, **caractérisé en ce que** avant de se poser sur le profilé (20), le moule (14) effectue d'abord un déplacement relatif par rapport à la surface de l'objet (1) qui le positionne de manière inclinée, l'arête (15) étant pratiquement au contact de la surface, à l'endroit prévu pour être la limite (21) du profilé (2) dirigée vers l'intérieur de la surface de l'objet (1) **et en ce que,** ensuite, son déplacement est une rotation (P) autour de cette arête (15) jusqu'à ce que la surface interne de la cavité occupe la position prévue pour la surface du profilé (2).

6. Procédé de postformage selon la revendication 4 ou la revendication 5, **caractérisé par** l'utilisation d'un moule (14) qui comporte également une seconde arête tranchante (17) qui coupe la matière du profilé (20) et qui la refoule en créant la limite du profilé (2) dirigée vers l'extérieur de la surface de l'objet (1).

7. Procédé de postformage selon l'une des revendications précédentes, **caractérisé en ce que** l'on place un second moule (8) destiné à supporter une partie (11) du profilé (2) qui déborde de l'objet (1), et qui est au voisinage du bord (10) de sa surface.

8. Procédé de postformage selon la revendication 6 et la revendication 7, **caractérisé en ce que** l'arête tranchante (17) qui coupe la matière du profilé (20) arrive en fin de son déplacement, au contact du second moule (8).

9. Procédé de postformage selon l'une des revendications 2 à 8, **caractérisé en ce que** le déplacement du premier moule (14) se termine de manière à entraîner la masse de matériau du profilé (20) refoulée vers l'extérieur.

10. Dispositif pour la mise en oeuvre du procédé selon la revendication 1, comportant des moyens de positionnement et de fixation de l'objet (1) qui garantissent la localisation précise du profilé (20) à postformer, ainsi qu'un premier moule (14) avec une cavité dont la forme correspond à celle à donner au profilé, le moule (14) étant capable de tourner d'un mouvement circulaire autour d'un axe de rotation orienté parallèlement à l'axe longitudinal du profilé (20) pour se poser sur le profilé (20), **caractérisé en ce que** la forme du moule est telle qu'il se termine du côté intérieur à l'objet par une arête (15) dégagée vers l'extérieur, le moule (14) étant capable de se déplacer d'abord sensiblement perpendiculairement à la surface de l'objet en s'en rapprochant de manière inclinée jusqu'à ce que ladite arête (15) vienne pratiquement au contact de la surface de l'objet (1) à l'emplacement du bord du profilé du côté intérieur, le moule (14) étant capable de tourner d'un mouvement circulaire autour d'un axe parallèle et voisin de ladite arête (15).

11. Dispositif selon la revendication 10, **caractérisé en ce que** le premier moule (14) comporte à la limite de la cavité dirigée vers l'extérieur de l'objet (1) une arête tranchante (17) dont la forme permet d'écarter la matière excédentaire vers l'extérieur de l'objet.

12. Dispositif selon la revendication 10 ou la revendication 11, **caractérisé en ce qu'il** comporte un second moule (8) voisin du bord de la surface de l'objet (1) et qui supporte une partie du profilé postformé qui déborde de l'objet.

13. Dispositif selon l'une des revendications 10 à 12, **caractérisé en ce que** le premier moule est porté par un élément comportant un segment d'arc de cercle (41) guidé par au moins trois galets (36, 37, 38) dont deux sont d'un même côté, le cercle et les galets assurant le mouvement circulaire tandis que le déplacement perpendiculairement à la surface est effectué par le support (27) du segment d'arc de cercle.

14. Application du dispositif selon l'une des revendications 10 à 13 au postformage de la zone de raccordement entre le début et la fin d'un profilé qui constitue une boucle sur la surface d'un objet.

15. Application selon la revendication 14 à la fabrication d'un vitrage (1) avec un profilé périphérique (2) équipé d'une lèvre débordante (3).

## Claims

1. Method for the post-forming of an extrusion (20) extruded onto the surface of an object (1), in which a mould (14) which has a cavity corresponding to the shape of the extrusion (2) is placed over the extrusion (20) in a rotational movement (P), characterized in that the axis of rotation (15) is located near the surface of the object (1).

2. Post-forming method according to Claim 1, characterized in that the axis of rotation (15) is located on the other side of the extrusion (2) to the edge of the object (1).

3. Post-forming method according to Claim 1 or Claim 2, characterized in that the mould (14) in rotating causes the material of the extrusion (20) to be pushed outwards from the surface of the object (1).

4. Post-forming method according to Claim 2 or Claim 3, characterized by the use of a mould (14) which has a protrusion (16) with a sharp edge (15) about which the rotation takes place.

5. Post-forming method according to Claim 4, characterized in that before being placed over the extrusion (20), the mould (14) first of all performs a relative displacement with respect to the surface of the object (1), which positions it in an inclined manner, the sharp edge (15) being practically in contact with the surface at the location chosen to be the limit (21) of the extrusion (2) towards the inside of the surface of the object (1), and in that its displacement thereafter is a rotation (P) about this sharp edge (15) until the internal surface of the cavity occupies the chosen position of the surface of the extrusion (2).

6. Post-forming method according to Claim 4 or Claim 5, characterized by the use of a mould (14) which also comprises a cutting second sharp edge (17) which cuts the material of the extrusion (20) and pushes it back, creating the limit of the extrusion (2) towards the outside of the surface of the object (1).

7. Post-forming method according to one of the preceding claims, characterized in that a second mould (8) intended to support a part (11) of the extrusion (2) which protrudes from the object (1) and which is near the edge (10) of its surface is positioned.

8. Post-forming method according to Claim 6 and Claim 7, characterized in that the cutting sharp edge (17) which cuts the material of the extrusion (20) comes into contact with the second mould (8) at the end of its displacement.

9. Post-forming method according to one of Claims 2 to 8, characterized in that the displacement of the first mould (14) ends in such a way as to push the pushed-back mass of material of the extrusion (20) outwards.

10. Device for implementing the method according to Claim 1, comprising means for positioning and fixing the object (1), which guarantee precise location of the extrusion (20) that is to be post-formed, and a first mould (14) with a cavity whose shape corresponds to the shape to be given to the extrusion, the mould (14) being capable of rotating in a circular movement about an axis of rotation oriented parallel to the longitudinal axis of the extrusion (20) so that it can be positioned over the extrusion (20), characterized in that the shape of the mould is such that it ends, on the inside of the object, in a sharp edge (15) with an external clearance, the mould (14) being capable of being displaced firstly approximately at right angles to the surface of the object, approaching it in an inclined manner until the said sharp edge (15) comes practically into contact with the surface of the object (1) at the location of the inside edge of the extrusion, the mould (14) being capable of rotating in a circular movement about an axis parallel and near to the said sharp edge (15).

11. Device according to Claim 10, characterized in that the first mould (14) comprises, at the limit of the cavity towards the outside of the object (1), a cutting sharp edge (17) whose shape allows the excess material to be moved away towards the outside of the object.

12. Device according to Claim 10 or Claim 11, characterized in that it comprises a second mould (8) near to the edge of the surface of the object (1) and which supports a part of the post-formed extrusion which protrudes from the object.

13. Device according to one of Claims 10 to 12, characterized in that the first mould is carried by an element comprising a segment of an arc of a circle (41) guided by at least three rollers (36, 37, 38), two of which are on the same side, the circle and the rollers providing the circular movement while the displacement at right angles to the surface is performed by the support (27) of the segment of an arc of a circle.

14. Application of the device according to one of Claims 10 to 13 to the post-forming of the region where the start and end of an extrusion which constitutes a loop on the surface of an object meet.

15. Application according to Claim 14 to the manufacture of window glazing (1) with a peripheral extrusion (2) equipped with a protruding lip (3).

## Patentansprüche

1. Verfahren zum Nachformen eines extrudierten Profils (20) auf der Oberfläche eines Gegenstands (1), bei dem ein Formwerkzeug (14), das eine der Form des Profils (2) entsprechende Höhlung aufweist, in einer Drehbewegung (P) auf das Profil (20) aufgebracht wird, dadurch gekennzeichnet, daß sich die Drehachse (15) in der Nähe der Oberfläche des Gegenstands (1) befindet.

2. Nachformverfahren nach Anspruch 1, dadurch gekennzeichnet, daß sich die Drehachse (15) auf der dem Rand des Gegenstands (1) gegenüberliegenden Seite des Profils (2) befindet.

3. Nachformverfahren nach Anspruch 1 oder 2, dadurch gekennzeichnet, daß das Formwerkzeug (14) bei seiner Drehung das Material des Profils (20) zur Außenseite der Oberfläche des Gegenstands (1) hin zurückschiebt.

4. Nachformverfahren nach Anspruch 2 oder 3, dadurch gekennzeichnet, daß man ein Formwerkzeug (14) verwendet, das einen Vorsprung (16) mit einer Kante (15), um die die Drehung erfolgt, aufweist.

5. Nachformverfahren nach Anspruch 4, dadurch gekennzeichnet, daß man das Formwerkzeug (14) vor dem Aufbringen auf das Profil (20) zunächst bezüglich der Oberfläche des Gegenstands (1) verschiebt, wodurch es in eine geneigte Position gebracht wird, wobei die Kante an der Stelle, die als Begrenzung (21) des Profils (2) zur Innenseite der Oberfläche des Gegenstands (1) hin vorgesehen ist, praktisch mit der Oberfläche in Berührung kommt, und daß man es danach durch Drehung (P) um die Kante (15) verschiebt, bis die Innenfläche der Höhlung die für die Oberfläche des Profils (2) vorgesehene Position einnimmt.

6. Nachformverfahren nach Anspruch 4 oder 5, dadurch gekennzeichnet, daß man ein Formwerkzeug (14) verwendet, das außerdem auch noch eine scharfe zweite Kante (17) aufweist, die das Material des Profils (20) schneidet und zurückschiebt, wodurch die Begrenzung (21) des Profils (2) zur Außenseite der Oberfläche des Gegenstands (1) hin gebildet wird.

7. Nachformverfahren nach einem der vorhergehenden Ansprüche, dadurch gekennzeichnet, daß man ein zweites Formwerkzeug (8) zum Tragen eines Teils (11) des Profils (2) anordnet, das über den Gegenstand (1) hinausragt und sich in der Nähe des Rands (10) der Oberfläche des Gegenstands befindet.

8. Nachformverfahren nach Anspruch 6 oder 7, dadurch gekennzeichnet, daß die das Material des Profils (20) schneidende scharfe Kante (17) am Ende ihrer Verschiebung mit dem zweiten Formwerkzeug (8) in Berührung kommt.

9. Nachformverfahren nach einem der Ansprüche 2 bis 8, dadurch gekennzeichnet, daß die Verschiebung des ersten Formwerkzeugs (14) so endet, daß die zurückgeschobene Masse des Materials des Profils (20) nach außen hin geschoben wird.

10. Vorrichtung zur Durchführung des Verfahrens nach Anspruch 1 mit Einrichtungen zum Positionieren und Fixieren des Gegenstands (1), die die präzise Anordnung des nachzuformenden Profils (20) gewährleisten, sowie einem ersten Formwerkzeug (14) mit einer Höhlung, deren Form der dem Profil zu verleihenden Form entspricht, wobei das Formwerkzeug (14) in Kreisbewegung um eine parallel zur Längsachse des Profils (20) liegende Achse gedreht werden kann, um es auf das Profil (20) aufzubringen, dadurch gekennzeichnet, daß das Formwerkzeug eine solche Form aufweist, daß es auf der Innenseite des Gegenstands mit einer Kante (15) mit Außenspielraum abschließt, wobei das Formwerkzeug (14) zunächst im wesentlichen senkrecht zur Oberfläche des Gegenstands verschoben werden kann, wobei es sich in geneigter Position nähert, bis die Kante (15) an der Stelle, an der sich der innenseitige Rand des Profils befindet, praktisch mit der Oberfläche des Gegenstands (1) in Berührung kommt, wobei das Formwerkzeug (14) in Kreisbewegung um eine parallel zur Kante (15) und in deren Nähe liegende Achse gedreht werden kann.

11. Vorrichtung nach Anspruch 10, dadurch gekennzeichnet, daß das erste Formwerkzeug (14) an der zur Außenseite des Gegenstands (1) gerichteten Begrenzung der Höhlung eine scharfe Kante (17) aufweist, deren Form die Entfernung von überschüssigem Material zur Außenseite des Gegenstands hin gestattet.

12. Vorrichtung nach Anspruch 10 oder 11, dadurch gekennzeichnet, daß sie ein zweites Formwerkzeug (8) enthält, das in der Nähe des Rands der Oberfläche des Gegenstands (1) angeordnet ist und einen über den Gegenstand hinausragenden Teil des nachgeformten Profils trägt.

13. Vorrichtung nach einem der Ansprüche 10 bis 12, dadurch gekennzeichnet, daß die erste Form von einem Element getragen wird, das ein durch mindestens drei Rollen (36, 37, 38), von denen zwei sich auf einer gleichen Seite befinden, geführtes Kreisbogensegment (41) aufweist, wobei der Kreis und die Rollen die Kreisbewegung gewährleisten, während die zur Oberfläche senkrechte Verschiebung durch den Träger (27) des Kreisbogensegments bewirkt wird.

14. Verwendung der Vorrichtung nach einem der Ansprüche 10 bis 13 zum Nachformen der Zone, in der sich der Anfang und das Ende eines Profils, das auf der Oberfläche eines Gegenstands eine Schleife bildet, treffen.

15. Verwendung anch Anspruch 14 zur Fertigung einer Verglasung (1) mit einem Umfangsprofil (2) mit einer vorstehenden Lippe (3).
